# EUROPÄISCHE PATENTSCHRIFT

(11) **EP 3 247 619 B1**
(45) Veröffentlichungstag und Bekanntmachung des Hinweises auf die Patenterteilung: **04.03.2020**
(21) Anmeldenummer: 15813783.6
(22) Anmeldetag: 15.12.2015
(51) Int. Cl.: B62M 6/45, B62M 6/55, F16H 49/00

(54) **ANTRIEBSBAUGRUPPE FÜR EIN MANUELL ANGETRIEBENES FAHRZEUG MIT EINEM ELEKTRISCHEN HILFSANTRIEB, VERFAHREN ZUM REGELN EINER SOLCHEN ANTRIEBSBAUGRUPPE UND VERWENDUNG**
DRIVE ASSEMBLY FOR A MANUALLY DRIVEN VEHICLE WITH AN ELECTRIC AUXILIARY DRIVE, METHOD FOR REGULATING A DRIVE ASSEMBLY OF THIS TYPE, AND USE
MODULE D'ENTRAÎNEMENT D'UN VÉHICULE À ENTRAÎNEMENT MANUEL MUNI D'UN ENTRAÎNEMENT AUXILIAIRE ÉLECTRIQUE, PROCÉDÉ DE RÉGULATION DUDIT MODULE D'ENTRAÎNEMENT ET UTILISATION

(30) Priorität: 19.01.2015 DE 102015100676
(43) Veröffentlichungstag der Anmeldung: 29.11.2017
(73) Patentinhaber: ZF Sachs Micro Mobility GmbH, 72072 Tübingen (DE)
(72) Erfinder: DOERNDORFER, Johannes, 73525 Schwaebisch Gmuend (DE)
(74) Vertreter: DREISS Patentanwälte PartG mbB
(86) Internationale Anmeldenummer: PCT/EP2015/079831
(87) Internationale Veröffentlichungsnummer: WO 2016/116226

(56) Entgegenhaltungen:
- WO-A2-2012/046216
- CN-A- 103 129 691
- CN-U- 202 449 162
- DE-A1-102010 037 183
- JP-A- 2000 168 672
- US-A- 6 152 249
- US-A1- 2013 006 463

## Beschreibung

Die vorliegende Erfindung betrifft eine Antriebsbaugruppe für ein manuell angetriebenes Fahrzeug, insbesondere ein Fahrrad oder ein Pedelec, mit einem elektrischen Hilfsantrieb, wobei die Antriebsbaugruppe eine erste Antriebswelle für einen manuellen Antrieb und einen Rotor des elektrischen Hilfsantriebs aufweist, wobei die erste Antriebswelle und der Rotor des elektrischen Hilfsantriebs mit einem gemeinsamen Abtriebselement gekoppelt sind.

Des Weiteren betrifft die vorliegende Erfindung ein Fahrzeug mit einer derartigen Antriebsbaugruppe. Des Weiteren betrifft die vorliegende Erfindung ein Verfahren zum Regeln einer Antriebsbaugruppe für ein manuell angetriebenes Fahrzeug mit einem elektrischen Hilfsantrieb. Des Weiteren betrifft die vorliegende Erfindung ein Verfahren zum Regeln eines Fahrzeugs, insbesondere eines Fahrrads oder Pedelecs.

Das Dokument DE 10 2010 037 183 A1 zeigt eine Antriebsbaugruppe für eine Fahrzeuglenkung mit den Merkmalen der Präambel von Anspruch 1.

Manuell angetriebene Fahrzeuge, insbesondere Fahrräder oder Pedelecs, bei denen ein Pedalierender, der das Fahrzeug durch Muskelkraft antreibt, von einem elektrischen Hilfsmotor unterstützt wird, sind bereits seit langem bekannt. So zeigt beispielsweise die Druckschrift WO 91/19637 A1 ein Planetengetriebe für Hybridfahrzeuge, bei dem auf einer zentralen Nabe mit zentrischem Flansch ein Sonnenrad mit mehreren Planetenrädern kämmt, die mittels Schrauben einerseits mit dem Planetenträger und andererseits mit dem Flansch und somit mit der Nabe in Verbindung stehen. Des Weiteren zeigt beispielsweise die schweizerische Patentanmeldung CH 705521 A2 ein Antriebssystem mit einem Planetengetriebe für mit Muskelkraft und elektrischem Hilfsmotor angetriebene Fahrzeuge bei dem ein Planetengetriebe und der elektrische Hilfsmotor in einem die Nabe des Antriebsrades bildenden Gehäuse untergebracht sind. Dabei sind das durch den Hilfsmotor angetriebene Sonnenrad und der durch die Muskelkraft angetriebene Außenring auf einer zentralen, nicht drehbaren, mit dem Rahmen des Fahrzeugs verbundenen Achse drehbar gelagert und der Planetenträger ist drehmomentschlüssig mit dem das Nabengehäuse bildenden Antriebsrad des Fahrzeugs gekoppelt.

Des Weiteren zeigt die Druckschrift EP 0 569 954A1 ein Fahrrad mit einem Elektromotor mit einem zur Ermittlung der Pedalkraft vorgesehenen Drehmomentsensor und entsprechender Regelung des Elektroantriebs. Des Weiteren zeigt beispielsweise die japanische Druckschrift JP-H-0899686 A ein motorunterstütztes Antriebssystem für ein Fahrrad mit einem Drehmomentsensor am Kettenantrieb im Hinterrad. Des Weiteren zeigt auch die Druckschrift JP 2011-168180 A ein solches antriebsunterstütztes Fahrrad mit einem Drehmomentsensor zur Ermittlung eines Pedalmoments.

Des Weiteren wird beispielsweise in der Druckschrift AT 40138 Beine Motorgetriebebaueinheit für einen elektrischen Antrieb von Fahrzeugen, insbesondere von Fahrrädern vorgeschlagen, die einen eisenlosen Scheibenläufer und ein Zykloidgetriebe vorschlägt.

Dabei ist ein Motor in Achsrichtung vom Getriebe trennenden Flansch mit einem Permanentfeldrückschluss ausgebildet, wobei der Scheibenläufer mit einer Hohlwelle verbunden ist und mit dieser am Flansch gelagert ist und das getriebeantriebsseitig an der Hohlwelle und an einem das Getriebe übergreifend teilgelagert ist.

Die vorgeschlagenen Antriebsbaugruppen für eine Motorunterstützung von manuellen Antrieben erfordern jedoch in der Regel einen relativ großen Bauraum. Des Weiteren sind sie relativ komplex in ihrem mechanischen Aufbau. Letztlich sind häufig Drehmomentsensoren vorzusehen, um eine Regelung eines elektrischen Hilfsantriebs zur Einkopplung der Leistung des elektrischen Hilfsantriebs in den manuellen Antriebsstrang zu ermöglichen.

Es ist daher eine Aufgabe der vorliegenden Erfindung, eine Antriebsbaugruppe für ein manuell angetriebenes Fahrzeug, insbesondere ein Fahrrad oder ein Pedelec, anzugeben, die einen einfachen und kompakten Aufbau aufweist und ohne Drehmomentsensoren das Einkoppeln eines elektrischen Antriebs in den manuellen Antriebsstrang ermöglicht.

Gemäß einem ersten Aspekt der Erfindung wird daher eine Antriebsbaugruppe für ein manuell angetriebenes Fahrzeug, insbesondere ein Fahrrad oder ein Pedelec, mit einem elektrischen Hilfsantrieb vorgeschlagen, wobei die Antriebsbaugruppe eine erste Antriebswelle für einen manuellen Antrieb und einen Rotor des elektrischen Hilfsantriebs aufweist, und wobei die erste Antriebswelle und der Rotor des elektrischen Hilfsantriebs mit einem gemeinsamen Abtriebselement gekoppelt sind, dadurch gekennzeichnet, dass die erste Antriebswelle und der Rotor des elektrischen Hilfsantriebs mit dem Abtriebselement mittels eines Wellgetriebes gekoppelt sind, wobei das Wellgetriebe eine Außenbuchse mit einer Innenverzahnung und eine verformbare Innenbuchse mit einer Außenverzahnung und einen Wellengenerator aufweist, wobei der Wellengenerator mit dem Rotor des elektrischen Hilfsantriebs drehfest zumindest mittelbar verbunden ist, wobei die verformbare Innenbuchse mit der ersten Antriebswelle drehfest zumindest mittelbar verbunden ist, und wobei die Außenbuchse das Abtriebselement ausbildet, und wobei die erste Antriebswelle ein erstes Ende und ein zweites Ende aufweist, die einander entgegengesetzt sind und an denen jeweils ein Pedal drehfest anordenbar ist.

Ein "Pedelec" bezeichnet dabei ein Fahrrad, bei dem der Pedalierende in seiner Tretbewegung durch einen elektrischen Antrieb unterstützt wird. Tritt der Pedalierende nicht, erfolgt kein Antrieb durch den elektrischen Hilfsantrieb. Grundsätzlich kann es sich bei dem "Fahrzeug" im Rahmen der Anmeldung um ein zweirädriges Fahrrad, aber auch um ein Fahrzeug mit mehr als zwei Rädern oder mit weniger als zwei Rädern handeln.

Auch in Fahrzeugen ohne Räder kann ein Einsatz erfolgen, beispielsweise in einem Wasserfahrzeug mit Schaufelradantrieb oder ähnlichem. Es kann sich beispielsweise auch um ein sogenanntes Handbike handeln, bei dem die Pedale mit den Händen bedient werden.

Der Begriff "manuell" meint dabei einen Antrieb durch Muskelkraft. Somit handelt es sich um ein mit Muskelkraft angetriebenes Fahrzeug, insbesondere ein Zweirad wie beispielsweise ein Fahrrad oder ein Pedelec.

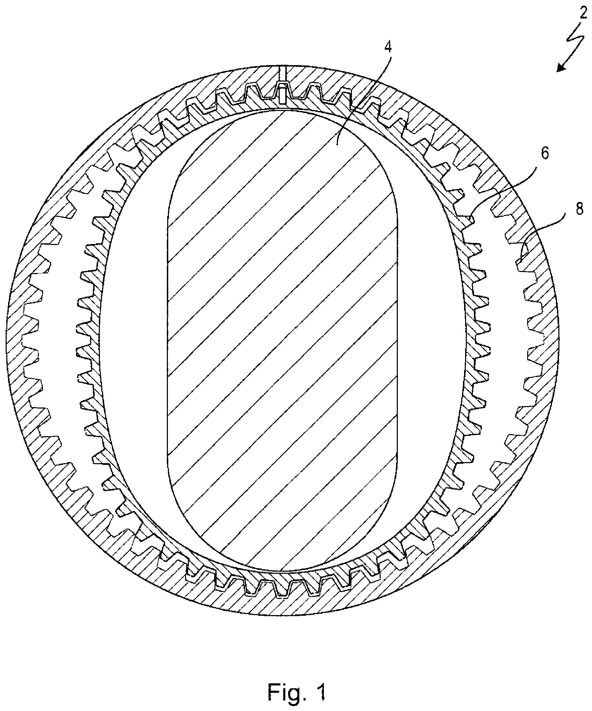

Ein "Wellgetriebe" ist bekannt, es wird unter anderem auch als Gleitkeilgetriebe oder auch als Spannungswellengetriebe bezeichnet. Im Englischen wird üblicherweise die Bezeichnung "strain wave gear" verwendet. Die Funktionsweise eines Wellgetriebes wird im Rahmen der detaillierten Figurenbeschreibung mit Blick auf die Figur 1 erläutert.

Im Rahmen der vorliegenden Anmeldung bedeutet "zumindest mittelbar", dass zwei Elemente entweder mittelbar, das heißt über ein oder mehrere weitere Elemente miteinander verbunden sind oder aber direkt, das heißt unmittelbar, miteinander verbunden sind.

Gemäß einem weiteren und zweiten nicht beanspruchten Aspekt wird die Verwendung eines Wellgetriebes zum additiven Zusammenführen eines manuellen Antriebs und eines elektrischen Hilfsantriebs vorgeschlagen, insbesondere der Drehzahl eines manuellen Antriebs eines elektrischen Hilfsantriebs, in einem manuell angetriebenen Fahrzeug, insbesondere einem Fahrrad oder einem Pedelec.

Gemäß einem weiteren und dritten Aspekt wird ein Fahrzeug, insbesondere ein Fahrrad oder ein Pedelec, mit einer Antriebsbaugruppe gemäß dem ersten Aspekt der Erfindung oder einer seiner Ausgestaltungen vorgeschlagen, wobei das Fahrzeug, insbesondere ein Rad des Fahrzeugs oder ein Hinterrad des Fahrzeugs, durch die Antriebsbaugruppe angetrieben ist, und wobei das Fahrzeug eine Regelungseinrichtung zum Regeln des elektrischen Hilfsantriebs aufweist.

Die Nutzung eines Wellgetriebes zum additiven Koppeln des manuellen Antriebs und des elektrischen Hilfsantriebs ermöglicht eine sehr kompakt aufgebaute Antriebsbaugruppe, insbesondere da ein einstufiges Wellgetriebe zum Umsetzen der Antriebsdrehzahl des elektrischen Hilfsantriebs auf das Abtriebselement eingesetzt werden kann.

Wellgetriebe können zudem in Serienfertigung kostengünstiger als zwei- oder dreistufige Getriebeeinheiten hergestellt werden. Dies ermöglicht einen elektrischen Hilfsantrieb mit hohen Drehzahlen. Das Wellgetriebe kann problemlos mit Untersetzungen im Bereich von 1:50 bis 1:200 ausgeführt werden. Hierdurch wird ein sehr geringes Gewicht des elektrischen Hilfsantriebs ermöglicht. Zudem sind die Drehmomente an dem manuellen Antrieb, an dem elektrischen Hilfsantrieb nach der Untersetzung und an dem Abtriebselement identisch.

Es erfolgt eine Addition der Drehzahlen des manuellen Antriebs und des elektrischen Hilfsantriebs. Auf diese Weise können teure Kraft- bzw. Momentsensoren wegfallen, was die Antriebsbaugruppe kostengünstiger herstellbar macht. Die Addition der Drehzahlen eignet sich zudem zur Erzeugung von Fahrunterstützungsprofilen für sportliche Fahrer.

Gemäß einem weiteren und vierten Aspekt der Erfindung wird ein Verfahren zum Regeln einer Antriebsbaugruppe für ein manuell angetriebenes Fahrzeug mit einem elektrischen Hilfsantrieb vorgeschlagen, insbesondere eine Antriebsbaugruppe gemäß dem ersten Aspekt der Erfindung oder einer seiner Ausgestaltungen, mit den folgenden Schritten: Erfassen einer Drehzahl einer ersten Antriebswelle für einen manuellen Antrieb, Ermitteln einer gewünschten Drehzahl des elektrischen Hilfsantriebs abhängig von der Drehzahl der ersten Antriebswelle, und Regeln der Drehzahl des elektrischen Hilfsantriebs mit der gewünschten Drehzahl des elektrischen Hilfsantriebs als Zielvorgabe.

Auf diese Weise wird es möglich, die Antriebsbaugruppe zusammen mit dem zusätzlichen Antriebsmotor als elektronisches Getriebe einzusetzen. Eine klassische mechanische Gangschaltung kann dann entfallen. Das Bereitstellen der gewünschten Drehzahl des elektrischen Hilfsantriebs und des gewünschten Antriebsmoments des weiteren Antriebsmotors kann beispielsweise durch Ermitteln dieser Werte aus vorgegebenen Daten hinsichtlich der Antriebsleistung und der von dem Pedalierenden aufzubringenden Drehzahl ermittelt werden. Hieraus lassen sich dann die durch den zusätzlichen Antriebsmotor hinzuzufügendes Antriebsmoment und die durch den elektrischen Hilfsantrieb aufzubringende Drehzahl ermitteln. Moment und Drehzahl können in diesem Antriebssystem frei eingestellt werden. Insbesondere wird es beispielsweise auch möglich, den elektrischen Hilfsantrieb mit einer negativen Drehzahl, das heißt entgegengesetzt zu der Tretrichtung des Pedalierenden, arbeiten zu lassen, so dass diese sehr hohe Drehzahlen mit sehr kleinem Moment treten kann.

Die eingangs gestellte Aufgabe wird daher vollkommen gelöst.

In einer nicht beanspruchten Ausgestaltung der Antriebsbaugruppe kann vorgesehen sein, dass die Außenbuchse zylindrisch ausgebildet ist, insbesondere mit einem kreisförmigen Querschnitt, dass die verformbare Innenbuchse zylindrisch ausgebildet ist, insbesondere mit einem kreisförmigen Querschnitt, und dass der Wellengenerator einen elliptischen Querschnitt aufweist, insbesondere wobei eine Ellipse des Querschnitts eine Exzentrizität e mit 0 < e < 1 aufweist. Mit anderen Worten ist die Ellipse kein Kreis.

Die Innenbuchse ist dabei verformbar. Ein gegebenenfalls kreisförmiger Querschnitt kann somit durch den Wellengenerator in einem elliptischen Querschnitt verformt werden. Aufgrund der zylindrischen Ausbildung ist es möglich, die Innenbuchse, die Außenbuchse und den Wellengenerator um die erste Antriebswelle herum in axialer Richtung, das heißt radial zu einer Längsachse der ersten Antriebswelle, verschachtelt anzuordnen und auf diese Weise Bauraum einzusparen.

In einer weiteren Ausgestaltung der Antriebsbaugruppe ist vorgesehen, dass die Antriebsbaugruppe eine zweite Antriebswelle aufweist, die als Hohlwelle ausgebildet ist und drehfest mit dem Rotor des elektrischen Hilfsantriebs verbunden ist, und wobei die erste Antriebswelle durch die zweite Antriebswelle geführt ist.

Auf diese Weise wird es möglich, den elektrischen Hilfsantrieb axial versetzt zu dem Wellgetriebe anzuordnen und mittels der ersten Antriebswelle mit dem Wellgetriebe drehfest zu koppeln. Über die erste Antriebswelle wird dann die Drehung des Generators in das Wellgetriebe übertragen. Auf diese Weise wird weiterer radialer Bauraum eingespart In einer weiteren Ausgestaltung der Antriebsbaugruppe kann vorgesehen sein, dass die zweite Antriebswelle einen Endabschnitt mit einem elliptischen Querschnitt aufweist, wobei der Endabschnitt den Wellengenerator ausbildet.

Auf diese Weise kann eine besonders kompakte Bauform erzielt werden, in dem ein Endabschnitt der Welle mit dem elliptischen Querschnitt ausgebildet wird und somit gleichzeitig als Wellengenerator dient. Der Endabschnitt der zweiten Antriebswelle überlappt sich somit axial mit der Innenbuchse und der Außenbuchse.

In einer weiteren Ausgestaltung der Antriebsbaugruppe kann vorgesehen sein, dass die zweite Antriebswelle einen Endabschnitt aufweist, und wobei ein Wälzlager mit einem elliptischen Querschnitt zwischen dem Endabschnitt und der Innenbuchse angeordnet ist.

Auf diese Weise kann ein Wellengenerator bereitgestellt werden. Das Wälzlager fördert des Weiteren eine Abrollbewegung des Wellengenerators an der Innenbuchse mit möglichst geringem Widerstand. Demgegenüber ist es jedoch grundsätzlich auch möglich, den Wellengenerator, beispielsweise den Endabschnitt der zweiten Antriebswelle direkt mit der Innenbuchse in Kontakt zu bringen, ohne dass ein Wälzlager zwischengeordnet ist.

In einer weiteren Ausgestaltung der Antriebsbaugruppe kann vorgesehen sein, dass das Abtriebselement drehfest zumindest mittelbar mit einem Kettenrad verbunden ist.

Auf diese Weise wird es somit möglich, über das Abtriebselement direkt ein Kettenrad anzutreiben, das dann über eine Kette beispielsweise ein Rad, etwa das Hinterrad, des Fahrzeugs antreibt.

In einer weiteren nicht beanspruchten Ausgestaltung der Antriebsbaugruppe ist es möglich, dass die Antriebsbaugruppe einen Drehpositionssensor zum Erfassen einer Drehposition der ersten Antriebswelle aufweist.

Auf diese Weise wird es möglich, in der Drehposition auch eine Drehzahl der ersten Antriebswelle und somit des manuellen Antriebs zu ermitteln. Die Tratzahl des Pedalierenden kann so erfasst werden und aus dieser eine mittels des elektrischen Hilfsantriebs zu beaufschlagende Drehzahl ermittelt werden.

In einer weiteren nicht beanspruchten Ausgestaltung der Antriebsbaugruppe kann vorgesehen sein, dass die Antriebsbaugruppe einen Drehpositionssensor zum Erfassen einer Drehposition der zweiten Antriebswelle aufweist und/oder einen Drehpositionssensor zum Erfassen einer Drehposition des Rotors des elektrischen Hilfsantriebs aufweist.

Grundsätzlich sollte für die Regelung des elektrischen Hilfsantriebs die Drehzahl des Rotors entweder unmittelbar erfasst werden oder aber mittelbar in Form der Drehzahl eines drehfest mit dem Rotor gekoppelten Elements, beispielsweise der zweiten Antriebswelle.

In einer weiteren Ausgestaltung kann vorgesehen sein, dass die Außenbuchse zylindrisch mit einer Innenöffnung ausgebildet ist, und wobei die erste Antriebswelle durch die Innenöffnung geführt ist.

Die Außenbuchse ist somit um die erste Antriebswelle herum angeordnet. Insbesondere erstreckt sich die erste Antriebswelle zentral durch die gesamte Antriebsbaugruppe. Dies ermöglicht eine kompakte Ausnutzung des Bauraums um die erste Antriebswelle herum durch die Elemente des Wellgetriebes und des elektrischen Hilfsantriebs.

In einer weiteren nicht beanspruchten Ausgestaltung kann vorgesehen sein, dass die Antriebsbaugruppe ein Gehäuse, insbesondere ein dreiteiliges Gehäuse, aufweist, das um die erste Antriebswelle herum angeordnet ist, wobei ein erstes Gehäuseelement eine Öffnung aufweist, durch die das Abtriebselement und die erste Antriebswelle geführt sind, und ein drittes Gehäuseelement eine Öffnung aufweist, durch die die erste Antriebswelle geführt ist, und wobei ein zweites Gehäuseelement zwischen dem ersten Gehäuseelement und dem dritten Gehäuseelement angeordnet ist.

Diese dreiteilige Ausgestaltung ermöglicht eine einfache Montage sämtlicher Komponenten der Antriebsbaugruppe, insbesondere durch sukzessives Aufstecken auf die erste Antriebswelle. Die erste Antriebswelle ragt auf beiden Seiten aus dem Gehäuse heraus. An der Antriebswelle können beispielsweise die Pedale für den manuellen Antrieb angeordnet werden.

In einer weiteren Ausgestaltung der Antriebsbaugruppe kann vorgesehen sein, dass die Außenbuchse einen ersten Abschnitt mit einem Durchmesser, an dem die Innenverzahnung angeordnet ist, und einen zweiten Abschnitt mit einem Durchmesser, der geringer als der erste Durchmesser ist, aufweist, wobei der zweite Abschnitt durch eine Öffnung eines ersten Gehäuseelements geführt ist.

Der zweite Abschnitt mit geringem Durchmesser wird somit durch die Öffnung eines ersten Gehäuseteils um die erste Antriebswelle herum aus dem Gehäuse geführt. Innerhalb des Gehäuses weitet sich die Außenbuchse dann auf den ersten Durchmesser auf, um in diesem Abschnitt das Wellgetriebe ausbilden zu können.

In einer weiteren Ausgestaltung der Antriebsbaugruppe kann vorgesehen sein, dass die erste Antriebswelle in der Außenbuchse mittels eines ersten Wälzlagers abgestützt ist, wobei die Außenbuchse in einem Gehäuse, insbesondere in dem ersten Gehäuseelement, der Antriebsbaugruppe mittels zumindest eines zweiten Wälzlagers abgestützt ist. Die erste Antriebswelle kann somit nicht an allen Stellen unmittelbar in dem Gehäuse abgestützt sein. Es kann vorgesehen sein, dass die erste Antriebswelle zunächst mittels eines ersten Wälzlagers in der Außenbuchse abgestützt ist. Die Außenbuchse kann wiederum mittels zumindest eines zweiten Wälzlagers, vorzugsweise zwei Wälzlagern, in dem Gehäuse, insbesondere dem ersten Gehäuseelement, abgestützt sein. Dies ermöglicht eine axiale kompakte Verschachtelung der Elemente auf geringem Bauraum.

In einer weiteren Ausgestaltung kann dabei vorgesehen sein, dass das erste Wälzlager und ein Wälzlager des zumindest einen zweiten Wälzlagers in einer bezüglich einer Längsachse der ersten Antriebswelle axialen Richtung zumindest teilweise überlappend angeordnet sind.

Auf diese Weise kann ein Kraftfluss von der ersten Antriebswelle in radialer Richtung direkt durch das erste Wälzlager, die Außenbuchse und das eine Wälzlager des zumindest einen zweiten Wälzlagers in das Gehäuse erfolgen. Bei dem Einbau der Antriebsbaugruppe in einen Fahrrad dient die Antriebsbaugruppe gleichzeitig als Tretlager des Fahrers und kann in einer Nabe des Rahmens des Fahrrads angeordnet sein.

In den äußeren Enden der ersten Antriebswelle sind dann die Pedale angeordnet. Die Pedale nehmen somit die Antriebskräfte und die Gewichtskräfte des Pedalierenden auf. Insofern ist es sinnvoll, diese Kräfte möglichst direkt in das Gehäuse der Antriebsbaugruppe und über dieses in den Rahmen des Fahrrads einzuleiten. Durch die überlappende Anordnung des ersten Wälzlagers und des einen Wälzlagers des zumindest einen zweiten Wälzlagers folgt diese Kraftleitung auf kürzestem Weg in radialer Richtung weg von der ersten Antriebswelle in das Gehäuse. Der Bereich des Wellgetriebes und des elektrischen Hilfsantriebs kann somit von diesen Kräften freigehalten werden.

In einer weiteren nicht beanspruchten Ausgestaltung der Antriebsbaugruppe kann vorgesehen sein, dass die zweite Antriebswelle in einem Gehäuse, insbesondere in dem zweiten Gehäuseelement, der Antriebsbaugruppe mittels eines dritten Wälzlagers abgestützt ist, und wobei die zweite Antriebswelle in dem Gehäuse, insbesondere in dem dritten Gehäuseelement, mittels eines vierten Wälzlagers abgestützt ist. Durch die Abstützung der zweiten Antriebswelle sowohl in dem zweiten als auch dem dritten Gehäuseelement wird eine ausreichende Abstützung und sichere Führung der zweiten Antriebswelle bereitgestellt.

Insbesondere kann so eine große Laufsicherheit bereitgestellt sein.

In einer weiteren Ausgestaltung der Antriebsbaugruppe kann vorgesehen sein, dass die erste Antriebswelle in einem Gehäuse, insbesondere in dem dritten Gehäuseelement, der Antriebsbaugruppe mittels eines fünften Wälzlagers abgestützt ist.

Insbesondere kann dieses fünfte Wälzlager auf einer dem Wellgetriebe beziehungsweise dem Abtriebselement abgewandten Seite des Gehäuses angeordnet sein. Es wird so sichergestellt, dass die erste Antriebswelle einer Seite direkt am Eingang des dritten Gehäuseteils direkt im Gehäuse abgestützt ist. Auf der entgegengesetzten Seite kann die erste Antriebswelle über das erste Wälzlager und eines des mindestens einen zweiten Wälzlagers in dem ersten Gehäuseelement abgestützt sein. Kräfte in radialer beziehungsweise in Einbau vertikaler Richtung werden somit direkt am Eingang des Gehäuses in das Gehäuse eingeleitet und zwischen den Lagerungen liegende Elemente, wie der elektrische Hilfsantrieb und das Wellgetriebe, bleiben kraftfrei.

In einer nicht beanspruchten Ausgestaltung eines Fahrzeugs kann vorgesehen sein, dass die Antriebsbaugruppe in einem Rahmen des Fahrzeugs angeordnet ist und ein Tretlager des Fahrzeugs ausbildet, insbesondere wobei die erste Antriebswelle mit zwei Pedalen drehfest verbunden ist.

Dies ermöglicht einen platzsparenden Einbau der Antriebsbaugruppe direkt im Rahmen des Fahrzeugs als Tretlager.

In einer weiteren Ausgestaltung kann vorgesehen sein, dass die Antriebsbaugruppe mit einem Rad des Fahrzeugs über ein Schaltungsgetriebe gekoppelt ist. Auf diese Weise kann mittels des Schaltungsgetriebes zwischen der Antriebsbaugruppe und dem Rad eine Umsetzung an Drehzahlen und Momenten in herkömmlicher Weise mittels eines Schaltungsgetriebes, insbesondere eines mechanischen Schaltungsgetriebes, erzielt werden.

In einer weiteren Ausgestaltung kann vorgesehen sein, dass das Fahrzeug einen Geschwindigkeitssensor zum Messen einer Geschwindigkeit des Fahrzeugs aufweist. Auf diese Weise kann eine Geschwindigkeit des Fahrzeugs überwacht werden und gegebenenfalls geschwindigkeitsabhängig eine Regelung des elektrischen Hilfsantriebs geregelt werden. Dies kann insbesondere zur Umsetzung bestimmter Vorgaben zu motorischen Antrieben innerhalb bestimmter Geschwindigkeitsbereiche notwendig sein.

In einer weiteren Ausgestaltung des Fahrzeugs kann vorgesehen sein, dass das Fahrzeug einen weiteren Antriebsmotor zum Antreiben des Fahrzeugs, insbesondere eines Rads oder eines weiteren Rads des Fahrzeugs, zusätzlich zu der Antriebsbaugruppe aufweist. Der weitere Antriebsmotor kann somit entweder im Falle eines Fahrrads beispielsweise das Hinterrad oder aber das Vorderrad antreiben. Auf diese Weise wird es möglich, mittels des weiteren Antriebsmotors direkt ein Antriebsmoment einzustellen. Mittels der Antriebsbaugruppe kann aufgrund des additiven Zusammenführens der Drehzahlen des manuellen Antriebs und des elektrischen Hilfsantriebs über das Wellgetriebe eine Drehzahl des Antriebs eingestellt werden. Dies erlaubt gemäß der Gleichung P = 2 · *n* · M · n, wobei P die Antriebsleistung in Watt [W], M das Antriebsmoment in Newtonmeter [Nm] und n die Antriebsdrehzahl in Umdrehungen pro Sekunde [1/s] ist, das freie Aufteilen einer Antriebsleistung im Moment und Drehzahl. So kann mit anderen Worten mittels einer solchen Ausgestaltung über eine elektronische Regelung eine Quasi-Getriebeschaltung bereitgestellt sein, ohne dass ein mechanisches Schaltungsgetriebe vorhanden sein muss. Die durch einen Pedalierenden zu tretende Drehzahl kann beliebig eingestellt werden.

In einer weiteren Ausgestaltung des Verfahrens kann vorgesehen sein, dass der Schritt des Erfassens einer Geschwindigkeit des Fahrzeugs vorgesehen ist, wobei das Ermitteln der gewünschten Drehzahl weiter abhängig von der ermittelten Geschwindigkeit des Fahrzeugs erfolgt.

Auf diese Weise kann beispielsweise vorgesehen sein, dass ab einer bestimmten Geschwindigkeit keinerlei Unterstützung des Pedalierenden durch einen elektrischen Hilfsantrieb mehr erfolgt.

In einer weiteren Ausgestaltung des Verfahrens kann vorgesehen sein, dass eine gewünschte Drehzahl Null ist, wenn eine Drehzahl der ersten Antriebswelle Null ist.

Auf diese Weise erfolgt die klassische Regelung eines Pedelecs. Wenn der Pedalierende nicht selbst tritt, erfolgt auch kein elektrischer Antrieb des Fahrzeugs beziehungsweise Fahrrads.

In einer weiteren Ausgestaltung des Verfahrens kann vorgesehen sein, dass zumindest für einen an Null angrenzenden Drehzahlbereich der ersten Antriebswelle eine lineare Abhängigkeit der gewünschten Drehzahl von der Drehzahl der ersten Antriebswelle vorgegeben ist.

Insofern kann in diesem Bereich eine Ermittlung der gewünschten Drehzahl nach der Formel n2 = a · n, + b bereitgestellt sein. Die Variable n2 ist dabei die gewünschte Drehzahl und n1 ist dabei die Drehzahl der ersten Antriebswelle, das heißt die Tretzahl des Pedalierenden. Bei den Koeffizienten a und b handelt es sich um Parameter. Ist die gewünschte Drehzahl Null bei der Drehzahl einer ersten Antriebswelle, dann ist b = Null zu setzen.

Des Weiteren kann vorgesehen sein, dass ein Koeffizient, insbesondere der Koeffizient a, der linearen Abhängigkeit einstellbar ist.

Auf diese Weise kann durch den Einstellungskoeffizienten a eine Unterstützung durch den elektrischen Hilfsmotor vorgegeben werden. Ist a = 1 eingestellt, wird zu der Drehzahl des Pedalierenden bzw. der ersten Antriebswelle eine identische Drehzahl durch den elektrischen Hilfsantrieb hinzuaddiert, in diesem Fall werden 50 % der Antriebsleistung durch den Pedalierenden und 50 % durch den elektrischen Hilfsantrieb erbracht. Legt man a < 1 fest, wird entsprechend weniger als 50 % der Antriebsleistung durch den elektrischen Hilfsantrieb erbracht. Bei einer Wahl von a > 1 wird entsprechend mehr als 50 % der Antriebsleistung durch den elektrischen Hilfsantrieb beigebracht.

In einer weiteren nicht beanspruchten Ausgestaltung des Verfahrens kann vorgesehen sein, dass ein Betrag einer gewünschten Drehzahl des Motors durch eine Maximaldrehzahl begrenzt ist.

Auf diese Weise kann die Drehzahl des Motors in positiver wie in negativer Richtung begrenzt werden. Auf diese Weise kann eine Beschädigung des Motors durch die falsche Regelung auf zu hoher Drehzahl vermieden werden.

In einer weiteren nicht beanspruchten Ausgestaltung des Verfahrens kann vorgesehen sein, dass die gewünschte Drehzahl bei einer vorbestimmten Grenzgeschwindigkeit Null ist.

Auf diese Weise kann beispielsweise festgelegt werden, dass bei und über einer Geschwindigkeit von 25 km/h die gewünschte Drehzahl Null ist, das heißt keinerlei Unterstützung mehr durch den elektrischen Hilfsantrieb erfolgt. Auf diese Weise können beispielsweise gesetzliche Bestimmungen zur Meldepflicht des Fahrzeugs berücksichtigt werden, beispielsweise indem eine Unterstützung durch den elektrischen Antrieb nur unterhalb einer Geschwindigkeit von 25 km/h erfolgt.

In einer weiteren Ausgestaltung des Verfahrens kann vorgesehen sein, dass die gewünschte Drehzahl bei zumindest einer ersten Drehzahl der ersten Antriebswelle positiv ist und bei zumindest einer zweiten Drehzahl der ersten Antriebswelle negativ ist. Somit kann der elektrische Hilfsantrieb sowohl mit dem Pedalierenden als auch gegen den Pedalierenden arbeiten. Insbesondere im Falle einer elektronischen Regelung sowohl der Antriebsdrehzahl bei der die Antriebsbaugruppe als auch eines Antriebsmoments über einen weiteren Antriebsmotor kann im Falle einer negativen Drehzahl des elektrischen Hilfsantriebs eine sehr hohe Drehzahl für den Pedalierenden bereitgestellt werden. Auf diese Weise können sehr kleine Gänge einer mechanischen Schaltung simuliert werden. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsformen der Erfindung sind in der Zeichnung dargestellt und werden in der nachfolgenden Beschreibung näher erläutert. Es zeigen:
Fig. 1 einen schematischen Aufbau eines Wellgetriebes zur Erläuterung dessen Funktion,
Fig. 2 eine Ausführungsform einer Antriebsbaugruppe,
Fig. 3 eine Explosionsansicht der Antriebsbaugruppe in Fig. 2,
Fig. 4 eine Querschnittsansicht im Längsschnitt der Antriebsbaugruppe in Fig. 2,
Fig. 5 einen Schnitt entlang einer Linie V-V in Fig. 4,
Fig. 6 einen schematischen Aufbau einer Ausführungsform eines Fahrzeugs,
Fig. 7a ein mögliches Regelungsschema für die Antriebsbaugruppe,
Fig. 7b ein weiteres mögliches Regelungsschema für die Antriebsbaugruppe,
Fig. 8 ein schematisches Ablaufdiagramm eines Verfahrens zum Regeln einer Antriebsbaugruppe, und
Fig. 9 ein schematisches Ablaufdiagramm eines Verfahrens zum Regeln eines Fahrzeugs.

Fig. 1 zeigt einen schematischen Aufbau eines Wellgetriebes 2. Anhand dieses Schemas soll zunächst kurz die Funktionsweise eines Wellgetriebes erläutert werden. Das Wellgetriebe weist einen Wellengenerator 4, eine Innenbuchse 6 und eine Außenbuchse 8 auf. Die Außenbuchse 8 weist eine Innenverzahnung und die Innenbuchse 6 weist eine Außenverzahnung auf, die über zwei Umfangsabschnitte miteinander in Eingriff stehen.

Die Querschnittsformel der Außenbuchse ist kreisförmig. Die Innenbuchse 6 ist verformbar ausgebildet. Ihre Grundform ist ebenfalls kreisförmig. Durch den Wellengenerator 4, der eine längsgestreckte oder elliptische Form aufweist, wird die Innenbuchse mit ihrer Außenverzahnung über zwei Umfangsabschnitte in Eingriff mit der Innenverzahnung der Außenbuchse 8 gedrückt. Die Zähnezahl der Außenverzahnung der Innenbuchse 6 und der Innenverzahnung der Außenbuchse 8 sind verschieden voneinander. Beispielsweise können sie um einen Zahn voneinander abweichen. Hält man beispielsweise die Außenbuchse 8 fest und dreht den Wellengenerator 4, rollt die Außenverzahnung der Innenbuchse 6 auf der Innenverzahnung der Außenbuchse 8 ab. Bei einer vollständigen Umdrehung des Wellengenerators bewegt sich die Innenbuchse dann um eine Zahnteilung relativ zu der Außenbuchse 8. Auf diese Weise kann eine sehr hohe Übersetzung zwischen einer Eingangsdrehzahl und einer Ausgangsdrehzahl - in diesem Fall die Drehzahl der Innenbuchse 6- bereitgestellt werden. Wird, wie im Rahmen der vorliegenden Erfindung, die Außenbuchse 8 als Abtriebselement verwendet, kann sowohl über die Innenbuchse 6 als auch an den Wellengenerator antriebsseitig Leistung in das Wellgetriebe 2 eingebracht werden. Eine Besonderheit ist dabei, dass ein Drehmoment des Abtriebselements, das heißt ein Drehmoment der Außenbuchse 8, ein Drehmoment der Innenbuchse 6 und ein Drehmoment des Wellengenerators 4 nach der Getriebeumsetzung identisch sind. Eine eingangsseitige Drehzahl der Innenbuchse 6, und eine Drehzahl des Wellengenerators 4 nach der Getriebeumsetzung addieren sich zu einer Ausgangsdrehzahl der Außenbuchse 8. Wird beispielsweise der Wellengenerator mit einer Eingangsdrehzahl von 5000 U/min betrieben und ist die Zähnezahl der Außenverzahnung der Innenbuchse 6 und der Innenverzahnung der Außenbuchse 8 derart gewählt, dass eine Umsetzung von der Drehzahl von 1:50 erfolgt, würden durch den Wellengenerator auf die Abtriebsseite 100 U/min beaufschlagt. Werden direkt über die Innenbuchse 6 weitere 100 U/min beaufschlagt, dreht sich die Außenbuchse 8 damit insgesamt 200 U/min.

Aufgrund des hohen Übersetzungsverhältnisses wird es so besonders gut möglich, eine sehr hohe Eingangsdrehzahl, beispielsweise die eines elektrischen Motors, an dem Wellengenerator 4 mit einer geringeren Drehzahl auf der Innenbuchse, beispielsweise eine Drehzahl eines Pedalierenden, additiv auf ein gemeinsames Abtriebselement, in diesem Fall die Außenbuchse 8, zusammenzuführen.

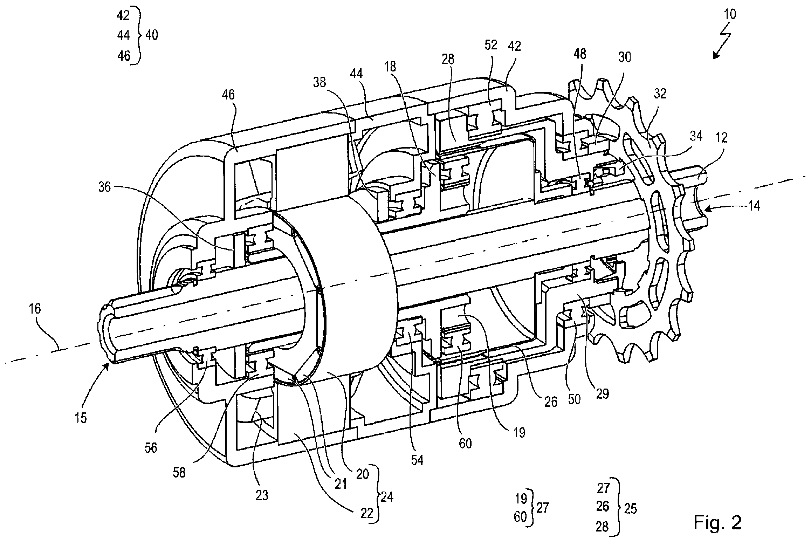

Eine konkrete Ausgestaltung einer derartigen Antriebsbaugruppe 10 zeigt die Fig. 2.

Die Antriebsbaugruppe 10 weist eine erste Antriebswelle 12 auf. Die erste Antriebswelle 12 ist für den manuellen Antrieb der Antriebsbaugruppe 10 vorgesehen. Die erste Antriebswelle 12 weist ein erstes Ende 14 und ein zweites Ende 15 auf, die einander entgegengesetzt sind. In diesen Enden kann drehfest jeweils ein Pedal angeordnet sein. Über die Pedale kann ein manueller Antrieb der ersten Antriebswelle 12 erfolgen. Die Antriebswelle 12 weist eine Längsachse 16 auf, um die diese rotiert wird. Des Weiteren ist eine zweite Antriebswelle 18 vorgesehen. Die zweite Antriebswelle 18 weist einen Endabschnitt 19 auf. Der Endabschnitt 19 ist an dem ersten Ende 14 der ersten Antriebswelle zugewandt.

Die zweite Antriebswelle 18 ist drehfest mit einem Rotor 20 eines elektrischen Hilfsantriebs 24 verbunden. Der elektrische Hilfsantrieb 24 weist des Weiteren einen Stator 22 auf. In dem Rotor 20 sind mehrere Permanentmagnete 21 angeordnet. In dem Stator 22 sind Motorwicklungen 23 angeordnet. Wie in der dargestellten Ausgestaltung kann der elektrische Hilfsantrieb 24 auch von einem anderen geeigneten Antriebstyp ausgestaltet sein. Auf diese Weise kann der Rotor über die zweite Antriebswelle 18 mit einem Wellgetriebe 25 gekoppelt sein. Das Wellgetriebe 25 weist eine Innenbuchse 26, einen Wellengenerator 27 und eine Außenbuchse 28 auf. Der Wellengenerator 27 ist von dem Endabschnitt 19 der zweiten Antriebswelle 18 und einem Wälzlager 60 ausgebildet.

Das Wälzlager 60 ist zwischen dem Endabschnitt 19 und der Innenbuchse 26 angeordnet.

Die Innenbuchse 26 weist eine zylindrische Form auf. In dem Bereich des Wellengenerators 27 ist die Innenbuchse 26 mit einem ersten, relativ großen, Querschnittsdurchmesser ausgebildet und ist dort elastisch verformbar. In diesem Bereich weist die Innenbuchse 26 eine Außenverzahnung auf. Des Weiteren weist die Innenbuchse 26 einen Bereich 33 von geringerem Durchmesser auf. In diesem Bereich ist die Innenbuchse 26 drehfest mit der ersten Antriebswelle 12 verbunden. Die Außenbuchse 28 bildet ein Abtriebselement 29 des Wellgetriebes 25 aus. Das Abtriebselement 29 ist mit einem Zahnkranz 32 drehfest gekoppelt. Über den Zahnkranz 32 kann beispielsweise die Antriebsbaugruppe 10 mit einem Rad eines Fahrzeugs gekoppelt werden. Der Zahnkranz 32 ist mittels einer Mutter 34 gesichert und über einen Abstandshalter 30 von einem Wälzlager 50 beabstandet, so dass der Zahnkranz 32 frei drehen kann.

Des Weiteren weist die Antriebsbaugruppe 10 einen ersten Positionssensor 36 auf.

Hierzu ist entsprechend ein Element drehfest mit der ersten Antriebswelle 12 gekoppelt, dessen Position erfasst werden kann. Auf diese Weise kann die Drehzahl der ersten Antriebswelle 12 erfasst werden.

Des Weiteren ist ein Positionssensor 38 zur Erfassung einer Drehposition der zweiten Antriebswelle 18 bereitgestellt. Diese weist ebenfalls ein Scheibenelement auf, das mit der zweiten Antriebswelle 18 drehfest gekoppelt ist. Auf diese Weise kann eine Position der zweiten Antriebswelle 18 ermittelt und insbesondere eine Drehzahl der zweiten Antriebswelle 18 bestimmt werden.

Die Antriebsbaugruppe 10 weist ein Gehäuse auf, das insgesamt mit dem Bezugszeichen 40 bezeichnet ist. Das Gehäuse ist dreiteilig ausgebildet und weist ein erstes Gehäuseelement 42, ein zweites Gehäuseelement 44 und ein drittes Gehäuseelement 46 auf.

Das erste Gehäuseelement 42, das zweite Gehäuseelement 44 und das dritte Gehäuseelement 46 sind jeweils im Wesentlichen zylindrisch aufgebaut und um die erste Antriebswelle 12 herum angeordnet. Das zweite Gehäuseelement 44 ist dabei zwischen dem ersten Gehäuseelement 42 und dem dritten Gehäuseelement 46 angeordnet.

Die erste Antriebswelle 12 ist mittels eines ersten Wälzlagers 48 in der Außenbuchse 28 abgestützt. Des Weiteren ist die erste Antriebswelle 12 mittels eines vierten Wälzlagers 56 in dem dritten Gehäuseelement 46 abgestützt. Das vierte Wälzlager 56 und das erste Wälzlager 48 sind im Wesentlichen entgegengesetzt zueinander an den Enden des Gehäuses 40 angeordnet. In radialer Richtung bezüglich der Längsachse 16 auftretende Kräfte werden somit direkt über die erste Antriebswelle 12 über das erste Wälzlager 48 und das vierte Wälzlager 56 in das Gehäuse 40 eingeleitet. Ein zwischenliegender Raum bleibt im Wesentlichen frei von Kräften senkrecht zur Längsachse 16. Die Außenbuchse 28 ist durch zwei zweite Wälzlager 50 und 52 in dem ersten Gehäuseelement 42 abgestützt. Dabei sind bezüglich der axialen Richtung entlang der Längsachse 16 das erste Wälzlager 48 und das zweite Wälzlager 50 überlappend angeordnet. Dies bedeutet, dass sie im Wesentlichen in axialer Richtung auf gleicher Höhe liegen. Die Kräfte senkrecht zur Längsachse 16 werden somit in radialer Richtung durch das erste Wälzlager 48 und das zweite Wälzlager 50 im Wesentlichen in gerader Linie in das Gehäuse 40 eingeleitet.

Die zweite Antriebswelle 18 ist mittels eines dritten Wälzlagers 54 in dem zweiten Gehäuseelement 44 abgestützt. Des Weiteren ist die zweite Antriebswelle 18 mittels eines fünften Wälzlagers 58 in dem dritten Gehäuseelement 46 abgestützt.

Grundsätzlich ist im Rahmen der Anmeldung möglich, dass die Wälzlager jeweils als Kugellager, Kegellager, Tunnellager, Nadellager oder jede andere geeignete Art von Wälzlager ausgebildet sein können.

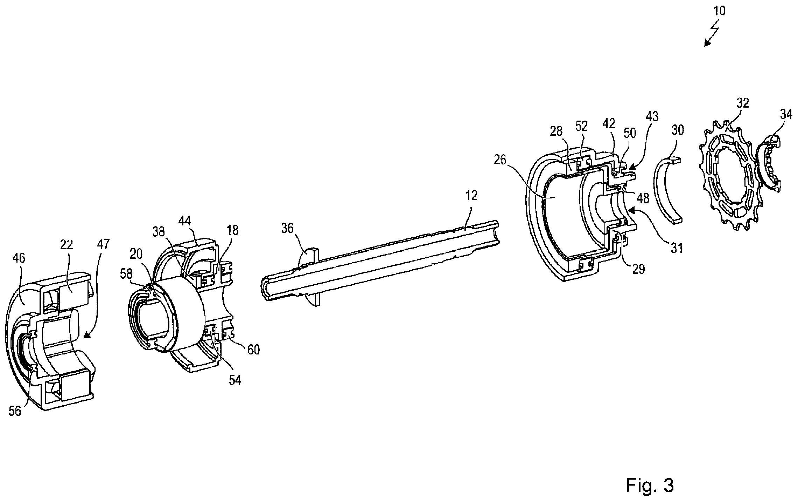

Die Fig. 3 zeigt die Antriebsbaugruppe 10 der Fig. 2 in einer explodierten symmetrischen Ansicht. Erkennbar sind die einzelnen Baugruppen der Anordnung. Insbesondere ist eine Innenöffnung 31 der Außenbuchse 28 gezeigt, durch die die erste Antriebswelle 12 geführt und mittels des ersten Wälzlagers 48 in dieser gelagert ist. Konzentrisch zu der Innenöffnung 31 erstreckt sich eine Öffnung 43 des ersten Gehäuseelements 42, durch die die Außenbuchse 28 geführt und in dieser die Außenbuchse 28 mittels des einen Wälzlagers 50 der zweiten Wälzlager 50 und 52 gelagert ist. Des Weiteren ist eine Öffnung 47 des dritten Gehäuseelements 46 gezeigt, durch die sich das zweite Ende 15 der ersten Antriebswelle 12 erstreckt.

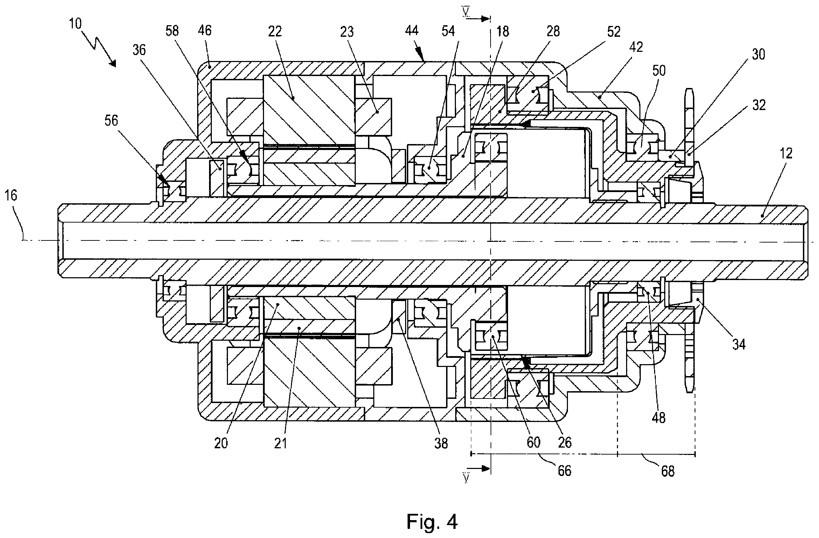

Die Fig. 4 zeigt einen Längsschnitt durch die Antriebsbaugruppe 10. Gleiche Elemente sind mit gleichen Bezugszeichen gekennzeichnet und werden im Folgenden nicht erneut erläutert.

Verdeutlicht ist des Weiteren die Ausgestaltung der Innenbuchse 26. Der Bereich geringeren Durchmessers 33 weist eine relativ große Wandstärke auf. In diesem Bereich ist die Innenbuchse 26 drehfest mit der ersten Antriebswelle 12 verbunden. Ein Abschnitt größeren Durchmessers der Innenbuchse 26, der auf die Außenverzahnung angebracht ist, ist mit einer wesentlich geringeren Wandstärke ausgebildet, so dass die Innenbuchse durch den Wellengenerator 27 verformbar ist.

Auch die Außenbuchse 28 weist einen Bereich größeren Durchmessers 66 und einen Bereich geringeren Durchmessers 68 auf. In dem Bereich größeren Durchmessers 66 ist die Innenverzahnung ausgebildet. Der Bereich geringeren Durchmessers ist durch die Öffnung 43 des ersten Gehäuseelements geführt. In dem Bereich geringen Durchmessers liegt auch das erste Wälzlager 48 und das zweite Wälzlager 50. Der Bereich größeren Durchmessers 66 ist mittels eines weiteren zweiten Wälzlagers 52 gegenüber dem ersten Gehäuseelement 48 abgestützt.

Auf diese Weise kann die über die erste Antriebswelle 12 und eingebrachte Leistung und die über den Rotor 20 bzw. die zweite Antriebswelle 18 in das Wellgetriebe 25 eingebrachte Leistung über ein gemeinsames Abtriebselement 29, das durch die Außenbuchse 28 gebildet wird, auf den Zahnkranz 32 zum Antrieb eines Fahrzeugs zusammengeführt werden.

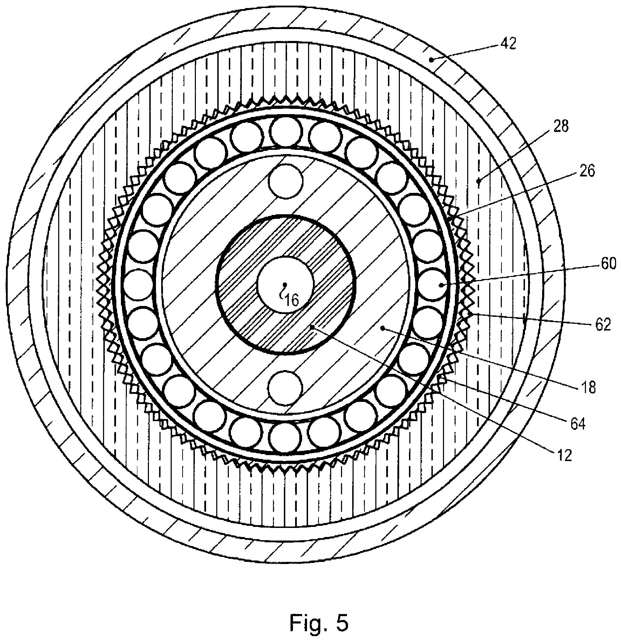

Die Fig. 5 zeigt einen Schnitt entlang der Linie V-V in Fig. 4. Es zeigt den Aufbau in radialer Richtung des Wellgetriebes 25. Außerdem befindet sich fest das erste Gehäuseelement 42. In diesem kann die Außenbuchse 28, die ebenfalls einen kreisförmigen Querschnitt aufweist, rotieren. Die Außenbuchse 28 weist eine Innenverzahnung 62 auf.

Das Wälzlager 60 des Wellgetriebes 25 weist einen elliptischen Außenumfangsquerschnitt auf. Die verformbare Innenbuchse 26 mit ihrer Außenverzahnung 64 wird so über zwei einander gegenüberliegenden Umfangsabschnitten in Verzahnungseingriff mit der Außenbuchse 28 gebracht. Auch der Endabschnitt 19 der zweiten Antriebswelle 18 weist in dem Bereich des Querschnitts einen elliptischen außenumfangsquerschnitt auf. Der Außenumfangsumfangsquerschnitt des Endabschnitts 19 muss jedoch nicht zwingend elliptisch sein, wenn bereits der Außenumfangsquerschnitt des Wellgetriebes elliptisch ist.

Das Wälzlager 60 kann auf den Endabschnitt 19 aufgepresst sein. Ein Laufring des Wälzlagers 60 an dem Außenumfangsquerschnitt kann verformbar ausgebildet sein. Auf diese Weise dienen der Endabschnitt 19 und das Wälzlager 60 als Wellengenerator 27 und verformen die Innenbuchse 26. Die zweite Antriebswelle 18 ist als Hohlwelle ausgebildet.

Ihr Innendurchmesser ist größer als ein Außendurchmesser der ersten Antriebswelle 12, so dass die erste Antriebswelle 12 durch die zweite Antriebswelle 18 entlang der Längsachse 16 geführt ist.

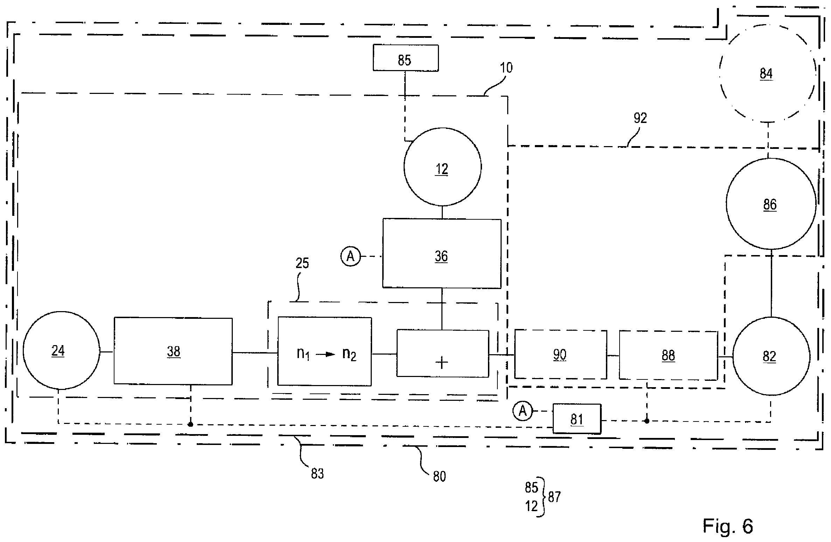

Die Fig. 6 zeigt eine schematische Darstellung eines Fahrzeugs 80. Bei diesem Fahrzeug kann es sich beispielsweise um ein Pedelec handeln, das heißt ein Fahrrad, bei dem die über Pedale aufgebrachte Antriebsleistung eines Pedalierenden durch den elektrischen Hilfsantrieb 24 unterstützt wird. Die manuelle Antriebskraft wird von dem Pedalierenden über Pedale 85 und die erste Antriebswelle 12 aufgebracht. Gleiche Elemente sind mit gleichen Bezugszeichen gekennzeichnet.

Die Antriebsbaugruppe führt somit die über die erste Antriebswelle 12 und von dem elektrischen Hilfsantrieb 24 aufgebrachte Leistung über eine Drehzahladdition mittels des Wellgetriebes 25 zusammen. Über die Positionssensoren 36 und 38 werden die Drehzahl der ersten Antriebswelle und eine Drehzahl der zweiten Antriebswelle am Eingang des Wellgetriebes 25 erfasst und an eine Regelungseinrichtung 81 eingegeben. Die Regelungseinrichtung 81 regelt den elektrischen Hilfsantrieb 24. Die gesamte Antriebsbaugruppe 10 dient als Tretlager des Fahrzeugs 80 und ist in dem Rahmen 83 des Fahrzeugs 80 angeordnet.

Das Fahrzeug 80 weist ein Rad 82 auf, das beispielsweise das Hinterrad des Pedelecs sein kann. Des Weiteren weist es ein weiteres Rad 84 auf, das beispielsweise das Vorderrad des Pedelecs sein kann.

Ausgangsseitig ist das Wellgetriebe 25 mit dem Rad 82 verbunden und treibt dieses und damit das Fahrzeug 80 an.

Zwischen das Wellgetriebe 25 und das Rad 82 kann eine mechanische Getriebeschaltung 90 und/oder ein Geschwindigkeitssensor 88 geschaltet sein, der eine Geschwindigkeit des Fahrzeugs 80 erfasst. Der Geschwindigkeitssensor gibt ebenfalls die Geschwindigkeit des Fahrzeugs in die Regelungseinrichtung 81 ein. Des Weiteren kann ein weiterer Antriebsmotor 86 vorgesehen sein, der direkt das Rad 82 antreibt. Alternativ kann der Antriebsmotor 86 auch mit dem weiteren Rad 84 verbunden sein und dieses antreiben. Die optionalen Komponenten des weiteren Antriebs 86, des Geschwindigkeitssensors 88 und der mechanischen Getriebeschaltung 90 sind zusammenhängend mit 92 gekennzeichnet. Wenn der weitere Antriebsmotor 86 bereitgestellt ist, kann insgesamt mittels der Regelungseinrichtung 81 eine elektronische Schaltung bereitgestellt werden. Eine mechanische Getriebeschaltung 90 ist dann nicht zwingend notwendig.

Mittels des weiteren Antriebsmotors 86 kann direkt ein Antriebsmoment an das Fahrzeug 80 geregelt werden. Die dann noch von einem Pedalierenden aufzubringende Drehzahl kann mittels einer entsprechenden Regelung des elektrischen Hilfsantriebs 24 eingestellt werden. Dabei kann insbesondere vorgesehen sein, dass der elektrische Hilfsantrieb auch entgegengesetzt der Tretrichtung des Pedalierenden arbeitet, um höhere Drehzahlen an den Pedalen 85 zu fordern. Eine Drehrichtung des elektrischen Hilfsantriebs 24 kann somit "negativ" sein, wenn eine Tretrichtung des Pedalierenden "positiv" ist.

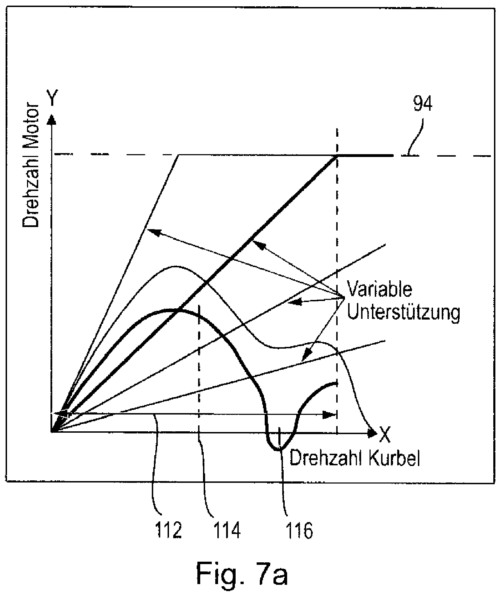

Fig. 7a zeigt ein mögliches Regelungsschema der Antriebsbaugruppe 10. Eine "Drehzahlkurbel" bezeichnet eine erfasste Drehzahl der ersten Antriebswelle 12. Darauf aufbauend kann festgelegt sein, wie groß eine entsprechende Unterstützungsdrehzahl des elektrischen Hilfsantriebs 24 sein soll, was auf der Y-Achse als "Drehzahl Motor" abgelegt ist. Im einfachsten Fall ist die Drehzahl des Motors proportional zu der Tretzahl des Pedalierenden. Tritt der Pedalierende nicht, ist auch die Drehzahl des Motors Null. Davon ausgehend besteht ein linearer, proportionaler Zusammenhang, wobei die Drehzahl des Motors - nach der Umsetzung durch das Wellgetriebe 25 -der der ersten Antriebswelle entspricht. Der linearer Zusammenhang kann auch überproportional oder unterproportional ausgestaltet sein, indem ein Koeffizient die Steigung in dem linearen Abschnitt > 1 für die überproportionale Steigung beziehungsweise < 1 für die unterproportionale Steigung gewählt ist. Grundsätzlich ist aber auch möglich, einen beliebigen Zusammenhang n2 = f(n 1) zu wählen. Insbesondere kann vorgesehen sein, dass bei einer ersten Drehzahl 114 die Drehzahl des Motors positiv ist und bei einer zweiten Drehzahl 116 der ersten Antriebswelle 12 die Drehzahl des Motors negativ festgelegt ist, das heißt der elektrische Hilfsantrieb arbeitet in entgegengesetzte Richtung. Die so ermittelte gewünschte Drehzahl des elektrischen Hilfsantriebs 24 wird nun als Regelungsvorgabe für dessen Regelung benutzt und als Zielwert angesteuert. Abhängig von dem Typ des elektrischen Hilfsantriebs kann eine maximale Drehzahl 94 vorgegeben sein, die nicht überschritten werden kann.

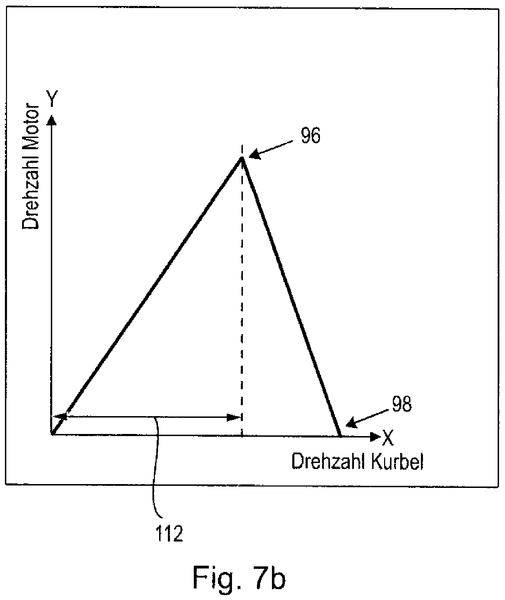

In der Fig. 7b ist ein weiteres Regelungsschema abgelegt. Auch hier ist ausgehend von dem Ursprung Null zunächst ein linearer Abschnitt 112 festgelegt, bei dem mit steigender Drehzahl der ersten Antriebswelle 12 auch die Drehzahl des elektrischen Hilfsantriebs steigt. Grundsätzlich ist dieses Regelungsschema jedoch mehrdimensional und zudem von einer Geschwindigkeit des Fahrzeugs abhängig. Es kann grundsätzlich eine Grenzgeschwindigkeit 98 vorgegeben sein, bei der keine Unterstützung mehr durch den elektrischen Hilfsantrieb 24 gegeben sein darf und somit eine Drehzahl des elektrischen Hilfsantriebs Null sein muss. Entsprechend kann leicht unterhalb dieser Grenzgeschwindigkeit eine Schwellwert-Geschwindigkeit 96 vorgegeben sein, ab der eine Drehzahl des elektrischen Hilfsantriebs auf Null zurückgefahren wird. Das Zurückfahren kann dabei linear, progressiv oder auch degressiv erfolgen.

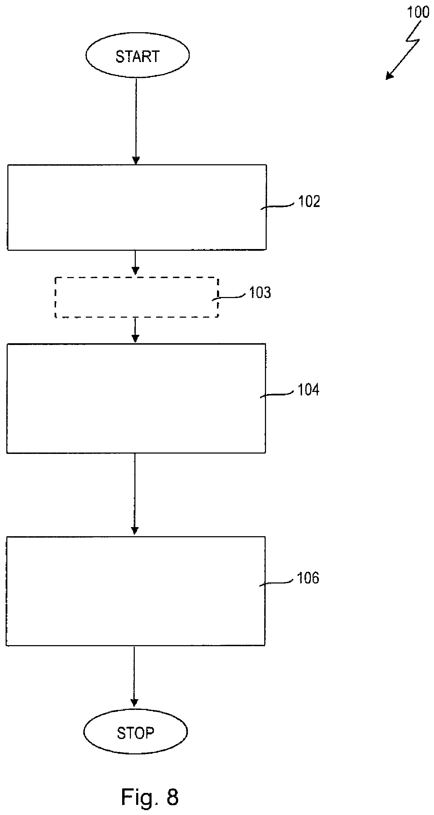

Fig. 8 zeigt ein schematisches Ablaufdiagramm eines Verfahrens zum Regeln der Antriebsbaugruppe 10. Das Fahrrad ist allgemein mit 100 bezeichnet.

Zunächst wird in einem Schritt 102 eine Drehzahl der ersten Antriebswelle für den manuellen Antrieb ermittelt. In einem Schritt 104 wird dann eine gewünschte Drehzahl des elektrischen Hilfsantriebs ermittelt. Diese gewünschte Drehzahl ist zumindest abhängig von der erfassten Drehzahl der ersten Antriebswelle 12. Anschließend wird in einem Schritt 106 der elektrische Hilfsantrieb 24 derart geregelt, dass die im Schritt 104 ermittelte gewünschte Drehzahl möglichst erreicht wird. Dabei dient die gewünschte Drehzahl als Zielvorgabe der Regelung. Die Ermittlung im Schritt 104 kann beispielsweise auf eine der im Zusammenhang mit den Figuren 7a und 7b geschilderten Verfahren durch Herauslesen aus einer ein- oder mehrdimensionalen Tabelle oder durch Berechnung anhand einer entsprechenden Funktion erfolgen.

Das Verfahren kann sich dann grundsätzlich kontinuierlich wiederholen, solange das Fahrzeug 80 genutzt wird. Der Schritt 102 kann entsprechend in bestimmten Zeitintervallen wiederholt werden, so dass sich auch die Zielvorgabe aus dem Schritt 104 in bestimmten Zeitintervallen ändert und die Regelung im Schritt 1 06 entsprechend angepasst wird.

In einem Schritt 103 kann zudem im Falle des Vorhandenseins eines Geschwindigkeitssensors eine Geschwindigkeit des Fahrzeugs erfasst werden. Dieser Parameter kann entsprechend die Zielwertvorgabe im Schritt 104 zusätzlich beeinflussen, beispielsweise kann die gewünschte Drehzahl oberhalb einer bestimmten Grenzdrehzahl durchweg auf
Null festgesetzt sein, wie voranstehend bereits erläutert wurde.

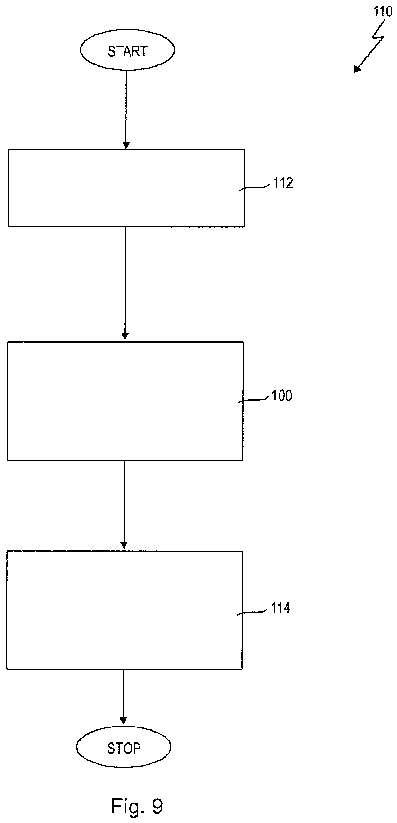

In der Fig. 9 ist schematisch ein Ablaufdiagramm eines Verfahrens 110 zum Regeln eines Fahrzeugs dargestellt. Das Fahrzeug ist mit einer Antriebsbaugruppe 10 bereitgestellt und fügt darüber hinaus über einen weiteren Antriebsmotor 86. In dem Verfahren wird zunächst in einem Schritt 112 eine gewünschte Drehzahl des elektrischen Hilfsantriebs 24
und eines gewünschten Antriebsmoments des weiteren Antriebsmotors 86 ausgeführt.

Das Bereitstellen kann in mehreren Arten erfolgen. Beispielsweise kann eine gewünschte Quasi-Gangstufe beziehungsweise eine gewünschte Drehzahl für den Pedalierenden vorgegeben sein. Des Weiteren kann eine gewünschte Antriebsleistung vorgegeben sein, die sich wiederum aus einer gewünschten Geschwindigkeit ergeben kann. Aus der gewünschten Antriebsleistung kann festgelegt werden, welcher Anteil über den weiteren Hilfsmotor erbracht werden soll. Hieraus kann festgelegt werden, welches Antriebsmoment durch den weiteren Antriebsmotor erbracht wird. So bleibt damit das Antriebsmoment, das durch den Pedalierenden zu treten ist. Mittels der Antriebsbaugruppe kann dann über den elektrischen Hilfsantrieb seine Regelung die von den Pedalierenden zu leistende Drehzahl eingestellt werden. Auf diese Weise kann durch elektrische Regelung eine Quasi-Gangschaltung bereitgestellt werden. Wünscht beispielsweise der Pedalierende ein großes Moment mit kleiner Drehzahl zu treten, so kann dies in den Schritten 113 und 114 durch Regeln der Antriebsbaugruppe und das Regeln des weiteren Antriebsmotors eingestellt werden. Der weitere Antriebsmotor bringt dann ein kleines oder sogar wenn es nicht notwendig ist - kein zusätzliches Antriebsmoment auf. Der Pedalierende kann dann mit geringer Drehzahl und großem Antriebsmoment treten. Dennoch kann er sich relativ zügig fortbewegen, indem der elektrische Hilfsantrieb hierzu eine Drehzahl additiv einbringt. Wie groß diese Drehzahl maximal sein kann, hängt selbstverständlich von der Leistung des elektrischen Hilfsantriebs in dem zu leistenden Antriebsmoment ab.

Umgekehrt kann der Pedalierende wünschen, mit nur sehr geringem Antriebsmoment, aber einer großen Drehzahl zu treten, quasi mit einer kleinen Gangstufe. Dann muss der elektrische Hilfsantrieb 24 nur wenig oder sogar keine zusätzliche Drehzahl liefern. Es kann sogar vorgesehen sein, dass der elektrische Hilfsantrieb sich entgegen der Tretrichtung des Pedalierenden dreht, so dass dieser eine noch höhere Drehzahl treten muss. Ein zusätzliches Antriebsmoment zum Fortbewegen des Fahrzeugs in der gewünschten Weise kann dann über den weiteren Antriebsmotor beaufschlagt werden. All dies kann mittels der Regelungseinrichtung 81 und gewünschten Nutzervorgaben stufenlos eingestellt werden. Ein mechanisches Schaltgetriebe ist dann im Grunde nicht mehr notwendig.

Auch dieses Verfahren kann grundsätzlich kontinuierlich fortgesetzt werden, solange das Fahrzeug 80 genutzt wird.

## Patentansprüche

1. Antriebsbaugruppe (10) für ein manuell angetriebenes Fahrzeug (80), insbesondere ein Fahrrad oder ein Pedelec, mit einem elektrischen Hilfsantrieb (24), wobei die Antriebsbaugruppe (10) eine erste Antriebswelle (12) für einen manuellen Antrieb und einen Rotor (20) des elektrischen Hilfsantriebs (24) aufweist, und wobei die erste Antriebswelle (12) und der Rotor (20) des elektrischen Hilfsantriebs (24) mit einem gemeinsamen Abtriebselement (29) gekoppelt sind, wobei die erste Antriebswelle (12) und der Rotor (20) des elektrischen Hilfsantriebs (24) mit dem Abtriebselement (29) mittels eines Wellgetriebes (25) gekoppelt sind, wobei das Wellgetriebe (25) eine Außenbuchse (28) mit einer Innenverzahnung (62) und eine verformbare Innenbuchse (26) mit einer Außenverzahnung (64) und einen Wellengenerator (27) aufweist, wobei der Wellengenerator (27) mit dem Rotor (20) des elektrischen Hilfsantriebs (24) drehfest zumindest mittelbar verbunden ist, wobei die verformbare Innenbuchse (26) mit der ersten Antriebswelle (12) drehfest zumindest mittelbar verbunden ist, und wobei die Außenbuchse (28) das Abtriebselement (29) ausbildet, **dadurch gekennzeichnet, dass**
die erste Antriebswelle (12) ein erstes Ende (14) und ein zweites Ende (15) aufweist, die einander entgegengesetzt sind und an denen jeweils ein Pedal drehfest anordenbar ist.

2. Antriebsbaugruppe (10) nach Anspruch 1, **dadurch gekennzeichnet, dass** die Antriebsbaugruppe (10) eine zweite Antriebswelle (18) aufweist, die als Hohlwelle ausgebildet ist und drehfest mit dem Rotor (20) des elektrischen Hilfsantriebs (24) verbunden ist, und wobei die erste Antriebswelle (12) durch die zweite Antriebswelle (18) geführt ist.

3. Antriebsbaugruppe (10) nach Anspruch 2, **dadurch gekennzeichnet, dass** die zweite Antriebswelle (18) einen Endabschnitt (19) mit einem elliptischen Querschnitt aufweist, wobei der Endabschnitt (19) den Wellengenerator (27) ausbildet.

4. Antriebsbaugruppe (10) nach Anspruch 2 oder 3, **dadurch gekennzeichnet, dass** die zweite Antriebswelle (18) einen Endabschnitt {19) aufweist, und wobei ein Wälzlager (60) mit einem elliptischen Querschnitt zwischen dem Endabschnitt (19) und der Innenbuchse (26) angeordnet ist.

5. Antriebsbaugruppe (10) nach einem der Ansprüche 1 bis 4, **dadurch gekennzeichnet, dass** das Abtriebselement (29) drehfest zumindest mittelbar mit einem Kettenrad (32) verbunden ist.

6. Antriebsbaugruppe (10) nach einem der Ansprüche 1 bis 5, **dadurch gekennzeichnet, dass** das die Außenbuchse (28) zylindrisch mit einer Innenöffnung (31) ausgebildet ist, und wobei die erste Antriebswelle (12) durch die Innenöffnung (31) geführt ist.

7. Antriebsbaugruppe (10) nach einem der Ansprüche 1 bis 6, **dadurch gekennzeichnet, dass** die Außenbuchse (28) einen ersten Abschnitt (66) mit einem ersten Durchmesser, an dem die Innenverzahnung (62) angeordnet ist, und einen zweiten Abschnitt (68) mit einem zweiten Durchmesser, der geringer als der erste Durchmesser ist, aufweist, wobei der zweite Abschnitt (68) durch eine Öffnung (43) eines ersten Gehäuseelements (42) geführt ist.

8. Antriebsbaugruppe (10) nach einem der Ansprüche 1 bis 7, **dadurch gekennzeichnet, dass** die erste Antriebswelle (12) in der Außenbuchse (28) mittels eines ersten Wälzlagers (48) abgestützt ist, wobei die Außenbuchse (28) in einem Gehäuse (40), insbesondere in dem ersten Gehäuseelement (42), der Antriebsbaugruppe (10) mittels zumindest eines zweiten Wälzlagers (50, 52) abgestützt ist.

9. Antriebsbaugruppe (10) nach Anspruch 8, **dadurch gekennzeichnet, dass** das erste Wälzlager (48) und ein Wälzlager (50) des zumindest einen zweiten Wälzlagers (50, 52) in einer bezüglich einer Längsachse (16) der ersten Antriebswelle (12) axialen Richtung zumindest teilweise überlappend angeordnet sind.

10. Fahrzeug (80), insbesondere ein Fahrrad oder ein Pedelec, mit einer Antriebsbaugruppe (10) nach einem der Ansprüche 1 bis 9, **dadurch gekennzeichnet, dass** das Fahrzeug (80), insbesondere ein Rad (82) oder ein Hinterrad des Fahrzeugs (80), durch die die Antriebsbaugruppe (10) angetrieben ist, und wobei das Fahrzeug (80) eine Regelungseinrichtung (81) zum Regeln des elektrischen Hilfsantriebs (24) aufweist.

11. Fahrzeug (80) nach Anspruch 10, **dadurch gekennzeichnet, dass** die Antriebsbaugruppe (10) mit einem Rad (82) des Fahrzeugs (80) über ein Schaltungsgetriebe (90) gekoppelt ist.

12. Fahrzeug (80) nach einem der Ansprüche 10 bis 11, **dadurch gekennzeichnet, dass** das Fahrzeug (80) einen Geschwindigkeitssensor (88) zum Messen einer Geschwindigkeit des Fahrzeugs (80) aufweist.

13. Fahrzeug (80) nach einem der Ansprüche 10 bis 12, **dadurch gekennzeichnet, dass** das Fahrzeug (80) einen weiteren Antriebsmotor (86) zum Antreiben des Fahrzeugs (80), insbesondere eines Rads (82) oder eines weiteren Rads (84) des Fahrzeugs (80), zusätzlich zu der Antriebsbaugruppe (10) aufweist.

14. Verfahren (100) zum Regeln einer Antriebsbaugruppe (10) nach einem der Ansprüche 1 bis 9 für ein manuell angetriebenes Fahrzeug (80) mit einem elektrischen Hilfsantrieb (24) mit den folgenden Schritten: Erfassen (102) einer Drehzahl einer ersten Antriebswelle (12) für einen manuellen Antrieb, Ermitteln (104) einer gewünschten Drehzahl des elektrischen Hilfsantriebs (24) abhängig von der Drehzahl der ersten Antriebswelle (12), und Regeln (106) der Drehzahl des elektrischen Hilfsantriebs (24) mit der gewünschten Drehzahl des elektrischen Hilfsantriebs (24) als Zielvorgabe, **dadurch gekennzeichnet, dass** das Verfahren des Weiteren den Schritt des Erfassens (103) einer Geschwindigkeit des Fahrzeugs (80) aufweist, und wobei das Ermitteln (104) der gewünschten Drehzahl weiter abhängig von der ermittelten Geschwindigkeit des Fahrzeugs (80) erfolgt.

15. Verfahren (100) zum Regeln einer Antriebsbaugruppe (10) nach einem der Ansprüche 1 bis 9 für ein manuell angetriebenes Fahrzeug (80) mit einem elektrischen Hilfsantrieb (24) mit den folgenden Schritten: Erfassen (102) einer Drehzahl einer ersten Antriebswelle (12) für einen manuellen Antrieb, Ermitteln (104) einer gewünschten Drehzahl des elektrischen Hilfsantriebs (24) abhängig von der Drehzahl der ersten Antriebswelle (12), und Regeln (106) der Drehzahl des elektrischen Hilfsantriebs (24) mit der gewünschten Drehzahl des elektrischen Hilfsantriebs (24) als Zielvorgabe, **dadurch gekennzeichnet, dass** die gewünschte Drehzahl bei zumindest einer ersten Drehzahl (114) der ersten Antriebswelle (12) positiv ist und bei zumindest einer zweiten Drehzahl (116) der ersten Antriebswelle (12) negativ ist.

16. Verfahren nach Anspruch 14 oder15, **dadurch gekennzeichnet, dass** eine gewünschte Drehzahl Null ist, wenn eine Drehzahl der ersten Antriebswelle (12) Null ist.

17. Verfahren nach einem der Ansprüche 14 bis 16, **dadurch gekennzeichnet, dass** zumindest für einen an Null angrenzenden Drehzahlbereich (112) der ersten Antriebswelle (12) eine lineare Abhängigkeit der gewünschten Drehzahl von der Drehzahl der ersten Antriebswelle (12) vorgegeben ist.

18. Verfahren nach Anspruch 17, **dadurch gekennzeichnet, dass** ein Koeffizient der linearen Abhängigkeit einstellbar ist.

19. Verfahren (110) zum Regeln eines Fahrzeugs (80) nach Anspruch 13, mit den folgenden Schritten: Bereitstellen (112) einer gewünschten Drehzahl des elektrischen Hilfsantriebs (24) und eines gewünschten Antriebsmoments des weiteren Antriebsmotors (86), Regeln (113) der Antriebsbaugruppe (10) mit der gewünschten Drehzahl des elektrischen Hilfsantriebs (24) als Zielvorgabe, und Regeln (114) des weiteren Antriebsmotors (86) mit dem gewünschten Antriebsmoment als Zielvorgabe.

## Claims

1. Drive assembly (10) for a manually driven vehicle (80), in particular a bicycle or a pedelec, comprising an electrical auxiliary drive (24), the drive assembly (10) having a first drive shaft (12) for a manual drive and a rotor (20) of the electrical auxiliary drive (24), and the first drive shaft (12) and the rotor (20) of the electrical auxiliary drive (24) being coupled to a common output element (29), the first drive shaft (12) and the rotor (20) of the electrical auxiliary drive (24) being coupled to the output element (29) by means of a strain wave gearing (25), the strain wave gearing (25) having an outer sleeve (28) which has an internal toothing (62), a deformable inner sleeve (26) which has an external toothing (64), and a wave generator (27), the wave generator (27) being at least indirectly connected to the rotor (20) of the electrical auxiliary drive (24) for rotation therewith, the deformable inner sleeve (26) being at least indirectly connected to the first drive shaft (12) for rotation therewith, and the outer sleeve (28) forming the output element (29), **characterized in that** the first drive shaft (12) has a first end (14) and a second end (15) which are opposite one another and on each of which a pedal can be arranged for rotation therewith.

2. Drive assembly (10) according to claim 1, **characterized in that** the drive assembly (10) has a second drive shaft (18) which is designed as a hollow shaft and is connected to the rotor (20) of the electrical auxiliary drive (24) for rotation with said rotor, the first drive shaft (12) extending through the second drive shaft (18).

3. Drive assembly (10) according to claim 2, **characterized in that** the second drive shaft (18) has an end portion (19) which has an elliptical cross section, the end portion (19) forming the wave generator (27).

4. Drive assembly (10) according to claim 2 or claim 3, **characterized in that** the second drive shaft (18) has an end portion (19), a roller bearing (60) which has an elliptical cross section being arranged between the end portion (19) and the inner sleeve (26).

5. Drive assembly (10) according to any of claims 1 to 4, **characterized in that** the output element (29) is at least indirectly connected to a chain wheel (32) for rotation therewith.

6. Drive assembly (10) according to any of claims 1 to 5, **characterized in that** the outer sleeve (28) is cylindrical and has an inner opening (31), the first drive shaft (12) extending through the inner opening (31).

7. Drive assembly (10) according to any of claims 1 to 6, **characterized in that** the outer sleeve (28) has a first portion (66) having a first diameter, on which portion the internal toothing (62) is arranged, and a second portion (68) having a second diameter which is smaller than the first diameter, the second portion (68) extending through an opening (43) of a first housing element (42).

8. Drive assembly (10) according to any of claims 1 to 7, **characterized in that** the first drive shaft (12) is supported in the outer sleeve (28) by a first roller bearing (48), the outer sleeve (28) being supported in a housing (40), in particular in the first housing element (42), of the drive assembly (10) by at least one second roller bearing (50, 52).

9. Drive assembly (10) according to claim 8, **characterized in that** the first roller bearing (48) and a roller bearing (50) of the at least one second roller bearing (50, 52) are arranged in an axial direction with respect to a longitudinal axis (16) of the first drive shaft (12) so as to at least partially overlap.

10. Vehicle (80), in particular a bicycle or a pedelec, comprising a drive assembly (10) according to any of claims 1 to 9, **characterized in that** the vehicle (80), in particular a wheel (82) or a rear wheel of the vehicle (80), is driven by the drive assembly (10), the vehicle (80) having a control device (81) for controlling the electrical auxiliary drive (24).

11. Vehicle (80) according to claim 10, **characterized in that** the drive assembly (10) is coupled to a wheel (82) of the vehicle (80) via a gearbox (90).

12. Vehicle (80) according to any of claims 10 to 11, **characterized in that** the vehicle (80) has a speed sensor (88) for measuring a speed of the vehicle (80).

13. Vehicle (80) according to any of claims 10 to 12, **characterized in that**, in addition to the drive assembly (10), the vehicle (80) has a further drive motor (86) for driving the vehicle (80), in particular a wheel (82) or a further wheel (84) of the vehicle (80).

14. Method (100) for controlling a drive assembly (10) according to any of claims 1 to 9 for a manually driven vehicle (80) having an electrical auxiliary drive (24), comprising the following steps: detecting (102) a speed of a first drive shaft (12) for a manual drive, determining (104) a desired speed of the electrical auxiliary drive (24) depending on the speed of the first drive shaft (12), and controlling (106) the speed of the electrical auxiliary drive (24), using the desired speed of the electrical auxiliary drive (24) as a target, **characterized in that** the method further comprises the step of detecting (103) a speed of the vehicle (80), the desired speed further being determined (104) depending on the determined speed of the vehicle (80).

15. Method (100) for controlling a drive assembly (10) according to any of claims 1 to 9 for a manually driven vehicle (80) having an electrical auxiliary drive (24), comprising the following steps: detecting (102) a speed of a first drive shaft (12) for a manual drive, determining (104) a desired speed of the electrical auxiliary drive (24) depending on the speed of the first drive shaft (12), and controlling (106) the speed of the electrical auxiliary drive (24), using the desired speed of the electrical auxiliary drive (24) as a target, **characterized in that** the desired speed is positive at at least one first speed (114) of the first drive shaft (12) and is negative at at least one second speed (116) of the first drive shaft (12).

16. Method according to claim 14 or claim 15, **characterized in that** a desired speed is zero when a speed of the first drive shaft (12) is zero.

17. Method according to any of claims 14 to 16, **characterized in that** a linear dependency of the desired speed on the speed of the first drive shaft (12) is predefined, at least for a speed range (112) of the first drive shaft (12) that is close to zero.

18. Method according to claim 17, **characterized in that** a coefficient of linear dependency is adjustable.

19. Method (110) for controlling a vehicle (80) according to claim 13, comprising the following steps: providing (112) a desired speed of the electrical auxiliary drive (24), and a desired drive torque of the further drive motor (86), controlling (113) the drive assembly (10) using the desired speed of the electrical auxiliary drive (24) as a target, and controlling (114) the further drive motor (86) using the desired drive torque as a target.

## Revendications

1. Module d'entraînement (10) pour un véhicule (80) entraîné manuellement, en particulier un vélo ou un vélo électrique, avec un entraînement auxiliaire électrique (24), dans lequel le module d'entraînement (10) présente un premier arbre d'entraînement (12) pour un entraînement manuel et un rotor (20) de l'entraînement auxiliaire électrique (24), et dans lequel le premier arbre d'entraînement (12) et le rotor (20) de l'entraînement auxiliaire électrique (24) sont accouplés à un élément de sortie (29) commun, dans lequel le premier arbre d'entraînement (12) et le rotor (20) de l'entraînement auxiliaire électrique (24) sont accouplés à l'élément de sortie (29) au moyen d'un réducteur harmonique (25), dans lequel le réducteur harmonique (25) présente une douille extérieure (28) avec une denture intérieure (62) et une douille intérieure (26) déformable avec une denture extérieure (64) et un générateurs d'ondes (27), dans lequel le générateurs d'ondes (27) est relié au moins indirectement de manière solidaire en rotation au rotor (20) de l'entraînement auxiliaire électrique (24), dans lequel la douille intérieure (26) déformable est reliée au moins indirectement de manière solidaire en rotation au premier arbre d'entraînement (12), et dans lequel la douille extérieure (28) réalise l'élément de sortie (29), **caractérisé en ce que** le premier arbre d'entraînement (12) présente une première extrémité (14) et une deuxième extrémité (15), qui sont opposées l'une à l'autre et sur lesquelles respectivement une pédale peut être disposée de manière solidaire en rotation.

2. Module d'entraînement (10) selon la revendication 1, **caractérisé en ce que** le module d'entraînement (10) présente un deuxième arbre d'entraînement (18), qui est réalisé en tant qu'arbre creux et est relié de manière solidaire en rotation au rotor (20) de l'entraînement auxiliaire électrique (24), et dans lequel le premier arbre d'entraînement (12) est guidé à travers le deuxième arbre d'entraînement (18).

3. Module d'entraînement (10) selon la revendication 2, **caractérisé en ce que** le deuxième arbre d'entraînement (18) présente une partie d'extrémité (19) avec une section transversale elliptique, dans lequel la partie d'extrémité (19) réalise le générateur d'ondes (27).

4. Module d'entraînement (10) selon la revendication 2 ou 3, **caractérisé en ce que** le deuxième arbre d'entraînement (18) présente une partie d'extrémité (19), et dans lequel un palier à roulement (60) avec une section transversale elliptique est disposé entre la partie d'extrémité (19) et la douille intérieure (26).

5. Module d'entraînement (10) selon l'une quelconque des revendications 1 à 4, **caractérisé en ce que** l'élément de sortie (29) est relié au moins indirectement de manière solidaire en rotation à un barbotin (32).

6. Module d'entraînement (10) selon l'une quelconque des revendications 1 à 5, **caractérisé en ce que** la douille extérieure (28) est réalisée de manière cylindrique avec une ouverture intérieure (31), et dans lequel le premier arbre d'entraînement (12) est guidé à travers l'ouverture intérieure (31).

7. Module d'entraînement (10) selon l'une quelconque des revendications 1 à 6, **caractérisé en ce que** la douille extérieure (28) présente une première partie (66) avec un premier diamètre, sur lequel la denture intérieure (62) est disposée, et une deuxième partie (68) avec un deuxième diamètre, qui est inférieur au premier diamètre, dans lequel la deuxième partie (68) est guidée à travers une ouverture (43) d'un premier élément de carter (42).

8. Module d'entraînement (10) selon l'une quelconque des revendications 1 à 7, **caractérisé en ce que** le premier arbre d'entraînement (12) est en appui dans la douille extérieure (28) au moyen d'un premier palier à roulement (48), dans lequel la douille extérieure (28) est en appui dans un carter (40), en particulier dans le premier élément de carter (42), du module d'entraînement (10) au moyen d'au moins un deuxième palier à roulement (50, 52).

9. Module d'entraînement (10) selon la revendication 8, **caractérisé en ce que** le premier palier à roulement (48) et un palier à roulement (50) de l'au moins un deuxième palier à roulement (50, 52) sont disposés de manière à se chevaucher au moins en partie dans une direction axiale par rapport à un axe longitudinal (16) du premier arbre d'entraînement (12).

10. Véhicule (80), en particulier vélo ou vélo électrique, avec un module d'entraînement (10) selon l'une quelconque des revendications 1 à 9, **caractérisé en ce que** le véhicule (80), en particulier une roue (82) ou une roue arrière du véhicule (80), est entraîné par le module d'entraînement (10), et dans lequel le véhicule (80) présente un dispositif de régulation (81) pour la régulation de l'entraînement auxiliaire électrique (24).

11. Véhicule (80) selon la revendication 10, **caractérisé en ce que** le module d'entraînement (10) est accouplé à une roue (82) du véhicule (80) par l'intermédiaire d'une boîte de vitesses (90).

12. Véhicule (80) selon l'une quelconque des revendications 10 à 11, **caractérisé en ce que** le véhicule (80) présente un capteur de vitesse (88) destiné à mesurer une vitesse du véhicule (80).

13. Véhicule (80) selon l'une quelconque des revendications 10 à 12, **caractérisé en ce que** le véhicule (80) présente un autre moteur d'entraînement (86) destiné à entraîner le véhicule (80), en particulier une roue (82) ou une autre roue (84) du véhicule (80), en plus du module d'entraînement (10).

14. Procédé (100) de régulation d'un module d'entraînement (10) selon l'une quelconque des revendications 1 à 9 pour un véhicule (80) entraîné manuellement avec un entraînement auxiliaire électrique (24) avec les étapes suivantes : la détection (102) d'un régime d'un premier arbre d'entraînement (12) pour un entraînement manuel, la détermination (104) d'un régime souhaité de l'entraînement auxiliaire électrique (24) en fonction du régime du premier arbre d'entraînement (12), et la régulation (106) du régime de l'entraînement auxiliaire électrique (24) avec le régime souhaité de l'entraînement auxiliaire électrique (24) comme objectif, **caractérisé en ce que** le procédé présente en outre l'étape de la détection (103) d'une vitesse du véhicule (80), et dans lequel la détermination (104) du régime souhaité s'effectue en outre en fonction de la vitesse déterminée du véhicule (80).

15. Procédé (100) pour la régulation d'un module d'entraînement (10) selon l'une quelconque des revendications 1 à 9 pour un véhicule (80) entraîné manuellement avec un entraînement auxiliaire électrique (24) avec les étapes suivantes : la détection (102) d'un régime d'un premier arbre d'entraînement (12) pour un entraînement manuel, la détermination (104) d'un régime souhaité de l'entraînement auxiliaire électrique (24) en fonction du régime du premier arbre d'entraînement (12), et la régulation (106) du régime de l'entraînement auxiliaire électrique (24) avec le régime souhaité de l'entraînement auxiliaire électrique (24) comme objectif, **caractérisé en ce que** le régime souhaité est positif pour au moins un premier régime (114) du premier arbre d'entraînement (12) et négatif pour au moins un deuxième régime (116) du premier arbre d'entraînement (12).

16. Procédé selon la revendication 14 ou 15, **caractérisé en ce qu'**un régime souhaité est nul lorsqu'un régime du premier arbre d'entraînement (12) est nul.

17. Procédé selon l'une quelconque des revendications 14 à 16, **caractérisé en ce qu'**au moins pour une plage de régimes (112) adjacente à zéro du premier arbre d'entraînement (12), une dépendance linéaire du régime souhaité par rapport au régime du premier arbre d'entraînement (12) est prédéfinie.

18. Procédé selon la revendication 17, **caractérisé en ce qu'**un coefficient de la dépendance linéaire est réglable.

19. Procédé (110) pour la régulation d'un véhicule (80) selon la revendication 13, avec les étapes suivantes : la fourniture (112) d'un régime souhaité de l'entraînement auxiliaire électrique (24) et d'un couple d'entraînement souhaité de l'autre moteur d'entraînement (86), la régulation (113) du module d'entraînement (10) avec le régime souhaité de l'entraînement auxiliaire électrique (24) comme objectif, et la régulation (114) de l'autre moteur d'entraînement (86) avec le couple d'entraînement souhaité comme objectif.
